(19) Europäisches Patentamt

European Patent Office

Office européen des brevets

(11) Veröffentlichungsnummer: **0 277 648 B1**

(12) **EUROPÄISCHE PATENTSCHRIFT**

(45) Veröffentlichungstag der Patentschrift:
14.11.90

(21) Anmeldenummer: 88101544.0

(22) Anmeldetag: 03.02.88

(51) Int. Cl.⁵: **B64F 1/305**

(54) **Fluggastbrücke.**

(30) Priorität: 04.02.87 DE 3703347

(43) Veröffentlichungstag der Anmeldung:
10.08.88 Patentblatt 88/32

(45) Bekanntmachung des Hinweises auf die Patenterteilung:
14.11.90 Patentblatt 90/46

(84) Benannte Vertragsstaaten:
DE FR GB NL

(56) Entgegenhaltungen:
DE-A- 3 023 885
US-A- 3 711 881
US-A- 4 120 067

(73) Patentinhaber: HÜBNER Gummi- und Kunststoff GmbH,
Agathofstrasse 15, D-3500 Kassel-Bettenhausen 1(DE)

(72) Erfinder: Koch, Robert, Schlesierstrasse 2, D-3437 Bad
Sooden-Allendorf(DE)

(74) Vertreter: Walter, Helmut, Dipl.-Ing., Aubinger
Strasse 81, D-8000 München 60(DE)

**Beschreibung**

Der Komforterhöhung beim Einsteigen in Flugzeuge dienen Fluggastbrückentunnel. Sie bestehen aus der eigentlichen Fluggastbrücke und aus einem diese überspannenden Tunnel. Die Fluggastbrücke ermöglicht es den Fluggästen, vom Flughafengebäude aus auf direktem Weg das Flugzeug zu besteigen, indem sie den Zwischenraum zwischen Flughafengebäude und Einstiegtür im Flugzeugrumpf überbrückt. Der Fluggastbrückentunnel ist auf der größeren Brückenlänge ein starres Gebilde aus den beiden auf der Brücke aufstehenden Seitenwänden und dem Tunneldach, das an das Flughafengebäude anschließt. Am vorderen Ende muß der Fluggastbrückentunnel aus elastisch verformbarem Material bestehen, um das vordere Ende des Fluggastbrückentunnels möglichst spaltfrei an die den Einstieg umgebenden Rumpfteile anlegen zu können. Das elastisch verformbare vordere Tunnelende ist im allgemeinen als sogenannter Bumper ausgeführt, der durch entsprechende Führungselemente weitgehend an verschiedene Rumpfkonturen angelegt werden kann. Die Führungselemente sind im allgemeinen Teleskope, die mit ihrem einen Ende am vorderen Ende des starren Tunnelabschnittes angelenkt sind und mit ihrem anderen Ende den Bumper nahe dessen oberem Ende halten. Aus der Grundkontur aller Flugzeugrümpfe heraus muß die Verstellrichtung des Teleskopes eine Resultierende aus einer vertikalen und einer horizontalen Bewegungskomponenten heraus sein, wobei die Richtung der Resultierenden so bestimmt wird, daß bei der Mehrzahl der Flugzeugrumpfkonturen eine weitestgehende Anlage des Bumpers am Flugzeugrumpf gewährleistet werden kann. Wie bei Kompromissen üblich, wird jedoch auch hier nur eine mehr oder weniger spaltfreie Anlage des Bumpers an unterschiedlichen Rumpfkonturen möglich. In der Mehrzahl der Fälle bleibt ein mehr oder weniger großer Spalt, insbesondere in dem der Flugzeugnase näheren oberen Ecke des Bumpers, weil dort im allgemeinen der Flugzeugrumpf besonders stark in zwei Ebenen geneigt ist, nämlich einmal zur Rumpfoberseite und einmal zur Rumpfnase hin.

Aufgabe der Erfindung ist es, die Möglichkeit der Anpassung des vorderen Endes des Fluggastbrückentunnels auch an stark unterschiedliche Rumpfkonturen deutlich zu verbessern.

Zur Lösung der Aufgabe wird mit der Erfindung eine Ausgestaltung der Vorrichtung gemäß dem Gattungsbegriff des Anspruches 1 in der Weise vorgeschlagen, wie sie im Kennzeichnungsteil dieses Anspruches 1 gekennzeichnet ist.

Merkmale zur zweckmäßigen Ausgestaltung der Erfindung sind Gegenstand der Unteransprüche. Die Erfindung ist nachfolgend anhand der Zeichnung näher erläutert. In der Zeichnung zeigen jeweils in Skelettlinien

Fig. 1 eine Lösung nach dem Stand der Technik und

Fig. 2 eine Lösung nach der Erfindung in zwei unterschiedlichen Betriebsstellungen.

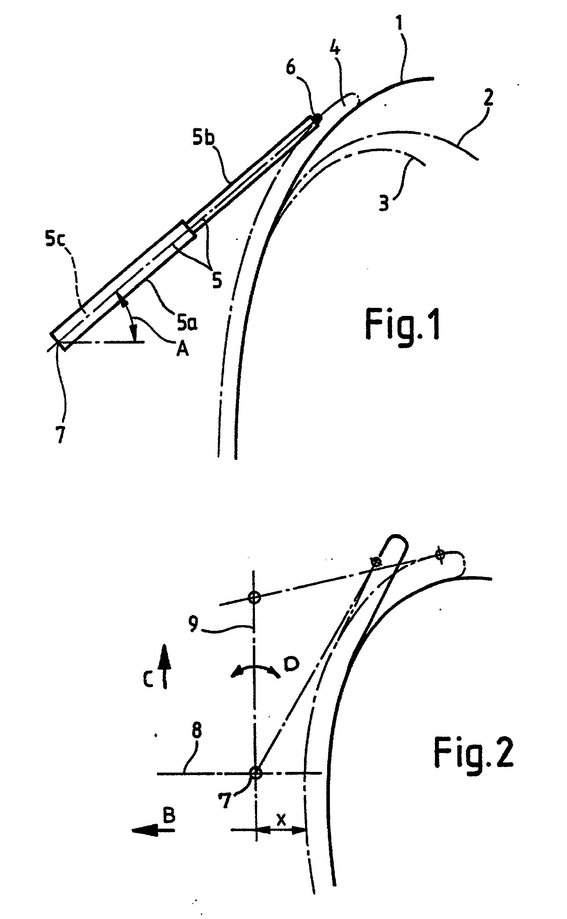

In Fig. 1 sind die Querschnittskonturen dreier verschiedener Flugzeugbaumuster mit den Linien 1,2 und 3 gekennzeichnet. An dem Bumper 4 als dem vorderen, elastisch verformbaren Ende eines Fluggastbrückentunnels ist eine als Teleskop ausgebildete Verstellvorrichtung 5 nahe dem oberen Ende des Bumpers 4 mit ihrem äußeren Ende angelenkt (Anschlußpunkt 6). Das innere Ende der Verstellvorrichtung 5 ist an einem festen Teil der Fluggastbrücke angelenkt (Anschlußpunkt 7). Die als Teleskop ausgebildete Verstellvorrichtung besteht aus einem Außenrohr 5a (Zylinder) und einem Innenrohr 5b (Kolben), wobei durch zwangsweise Veränderung der Fluid- insbesondere Flüssigkeitsfüllung des in dem Außenrohr 5a vom Innenrohr 5b begrenzten Zylinder raumes 5c die Länge der Verstellvorrichtung verändert werden kann. Mit einer Verlängerung der Verstellvorrichtung 5 wird das vordere Ende des Fluggastbrückentunnels dem Flugzeugrumpf genähert und an diesen angelegt. Mit einer Verkürzung der Verstellvorrichtung 5 wird das vordere Ende des Fluggastbrückentunnels mit dem Bumper 4 vom Flugzeugrumpf so weit entfernt, daß das Flugzeug von der Fluggastbrücke freikommt. Zweckmäßigerweise ist der Bewegung, die von der Verstellvorrichtung 5 bewirkt wird, eine rein horizontale Bewegung überlagert, vorgeschaltet oder nachgeschaltet, um den Abstand zwischen vorderem Fluggastbrückenende und Flugzeugrumpf in größerem Maße verändern zu können. Zweckmäßigerweise ist außerdem an jeder Seite des Fluggastbrückentunnels eine Verstellvorrichtung entsprechend der Verstellvorrichtung 5 vorgesehen. Ersichtlich kann mit der Lösung gemäß Fig.1 der Bumper 4 spaltfrei nur an die Flugzeugkontur 1 angelegt werden. Eine entsprechend spaltfreie Anlage an die Konturen 2 und 3 ist nicht möglich, weil die Vorschubrichtung der Verstellvorrichtung 5 zu steil ist. Die Verstellvorrichtung 5 würde den Bumper nach oben strecken, nicht aber sauber anlegen.

Diesen Mangel behebt die Erfindung durch die Ausgestaltung der Verstellvorrichtung bzw. Verstellvorrichtungen 5 gemäß Fig.2. Der Kern dieser Lösung besteht darin, daß die Neigung der Verstellvorrichtung 5 (Winkel A) veränderbar ist. Dadurch legt die Verstellvorrichtung den Bumper zunächst an den eher vertikalen Abschnitt der Rumpfkontur faltenlos an und dann ebenso zuverlässig an den Übergangsbogen zum eher horizontalen Dachteil des Rumpfes.

Die Neigungsänderung der Verstellvorrichtung 5 kann in der Weise erfolgen, daß der Abstand x des inneren Anlenkpunktes 7 der Verstellvorrichtung 5 vergrößert wird und diese Vergrösserung innerhalb einer horizontalen Ebene erfolgt (Pfeil B, Fig.2), daß der innere Anlenkpunkt 7 der Verstellvorrichtung innerhalb einer vertikalen Ebene verstellt wird (Pfeil C in Fig.2) oder auf einer Bahn verstellt wird, die sich aus zwei solchen Komponenten als Resultierende bildet. Im ersten Fall ist der Anlenkpunkt 7 auf einer horizontalen Führung 8, im zweiten Fall auf einer vertikalen Führung 9 verstellbar, und im dritten Fall ist der Anlenkpunkt auf einer vertikalen Führung 9 verstellbar, deren unteres Ende in einem Gelenk 10 an einem festen Teil der Übergangsbrücke gehalten ist, das Schwenkbewegungen der Führung 9 in Richtung des Doppelpfeiles D zuläßt, oder aber in Richtung des Pfeiles B verstellbar ist.

Bei einer besonders zweckmäßigen Ausgestaltung der Erfindung ist die Verstellvorrichtung 5 auf einer vertikalen Führung gehalten, die ihrerseits als Teleskop ausgebildet ist. Das zweite Teleskop, das die Verstellvorrichtung 5 bildet, ist am unteren Ende wiederum gelenkig an einem festen Teil der Übergangsbrücke gelagert, die Verstellkraft für dieses Teleskop ist geringer als die Verstellkraft für das Teleskop der ersten Verstellvorrichtung, und der Verstellweg des Teleskopes der ersten Verstellvorrichtung ist in bestimmter Weise begrenzt. Hierdurch wird der Gelenkpunkt 7 durch Ausfahren der Verstellvorrichtung 5 zunächst nach oben bewegt, bis der vorgesehene obere Endpunkt erreicht ist, worauf das Teleskop der ersten Verstellvorrichtung ausgefahren und der Bumper 4 sauber an unterschiedliche Rumpfkonturen angelegt wird.

## Patentansprüche

1. Mit seinem vorderen Ende an die unterschiedlichen Krümmungen von Flugzeugrümpfen anpaßbarer Fluggastbrückentunnel, wobei das obere, vordere Tunnelende mittels einer Teleskopstange dem Flugzeugrumpf zu nähern ist und hierzu weiter in Tunnellängsrichtung auszuschieben ist als das untere, vordere Tunnelende, dadurch gekennzeichnet, daß das dem vorderen Tunnelende abgekehrte Ende der Teleskopstange gegenüber dem unteren vorderen Tunnelende derart zwangsgeführt verstellbar ist, daß dabei durch Änderung der Neigung der Teleskopstange das obere, vordere Tunnelende an unterschiedliche Flugzeugrumpfkonturen gelegt werden kann.

2. Fluggastbrückentunnel nach Anspruch 1, dadurch gekennzeichnet, daß das dem vorderen Tunnelende abgekehrte Ende des Teleskopes als Hülse ausgebildet ist, die auf einer ortsfesten vertikalen Stange in deren Längsrichtung verstellbar ist.

3. Fluggastbrückentunnel nach Anspruch 2, dadurch gekennzeichnet, daß das untere Ende der vertikalen Stange in einem Gelenk gelagert ist, das zumindest Schwenkbewegungen der Stange derart ermöglicht, daß der Abstand des oberen Endes der Stange vom Flugzeugrumpf veränderbar ist.

4. Fluggastbrückentunnel nach Anspruch 1, dadurch gekennzeichnet, daß der Abstand zwischen dem dem vorderen Tunnelende abgekehrte Ende des Teleskopes und dem Flugzeugrumpf zu verändern ist, indem dieser Anlenkpunkt des Teleskopfes horizontal verstellbar ist.

5. Fluggastbrückentunnel nach Anspruch 1, dadurch gekennzeichnet, daß der Anlenkpunkt an dem dem vorderen Tunnelende abgekehrten Ende des Teleskopes auf einer Bahn verstellbar ist, die eine horizontale und eine vertikale Komponente aufweist.

6. Fluggastbrückentunnel nach Anspruch 1, dadurch gekennzeichnet, daß der Anlenkpunkt des Teleskopes an dessen dem vorderen Tunnelende abgekehrten Ende am einen Teil eines zweiteiligen Teleskopes gelagert ist.

7. Fluggastbrückentunnel nach Anspruch 6, dadurch gekennzeichnet, daß die Verstellkraft des zweiten Teleskopes geringer ist als die Verstellkraft des ersten Teleskopes, dessen Verstellweg auf unterschiedliche Werte zu begrenzen ist.

## Revendications

1. Tunnel de passerelle pour passagers d'avion, pouvant s'adapter, avec son extrémité avant, à différentes courbures de fuselages d'avions, l'extrémité supérieure avant du tunnel étant à rapprocher du fuselage de l'avion à l'aide d'une tige télescopique, ce pour quoi cette extrémité supérieure doit être plus étendue vers l'avant, dans la direction longitudinale du tunnel, que l'extrémité inférieure avant du tunnel, caractérisé en ce que l'extrémité de la tige télescopique, opposée à celle qui est adjacente à l'extrémité avant du tunnel, peut être déplacée, par guidage forcé, par rapport à l'extrémité inférieure avant du tunnel, de telle sorte que par variation de l'inclinaison de la tige télescopique, l'extrémité supérieure avant, du tunnel puisse être appliquée contre différents profils de fuselages d'avions.

2. Tunnel de passerelle pour passagers d'avion selon la revendication 1, caractérisé en ce que l'extrémité de l'élément télescopique, opposée à celle qui est adjacente à l'extrémité avant du tunnel, est réalisée sous la forme d'un fourreau qui peut être déplacé sur une tige verticale en position fixe, selon la direction longitudinale de cette dernière.

3. Tunnel de passerelle pour passagers d'avion selon la revendication 2, caractérisé en ce que l'extrémité inférieure de la tige verticale est montée sur une articulation qui autorise tout au moins des mouvements d'oscillation de la tige, de manière à ce que la distance entre l'extrémité supérieure de la tige et le fuselage de l'avion puisse être modifiée.

4. Tunnel de passerelle pour passagers d'avion selon la revendication 1, caractérisé en ce que la distance entre l'extrémité de l'élément télescopique opposée à celle qui est adjacente à l'extrémité avant du tunnel, et le fuselage de l'avion, peut être modifiée par le fait de pouvoir déplacer horizontalement ce point d'articulation de l'élément télescopique.

5. Tunnel de passerelle pour passagers d'avion selon la revendication 1, caractérisé en ce que le point d'articulation à l'extrémité de l'élément télescopique opposée à celle qui est adjacente à l'extrémité avant du tunnel, peut être déplacé sur une trajectoire présentant une composante horizontale et une composante verticale.

6. Tunnel de passerelle pour passagers d'avion selon la revendication 1, caractérisé en ce que le point d'articulation de l'élément télescopique, à son extrémité opposée à celle qui est adjacente à l'extrémité avant du tunnel, est monté sur l'une des parties d'un élément télescopique en deux parties.

7. Tunnel de passerelle pour passagers d'avion selon la revendication 6, caractérisé en ce que la force de déplacement du deuxième élément télescopique est inférieure à celle du premier élément télescopique dont la course de déplacement doit être limitée à différentes valeurs.

## Claims

1. A passenger gangway tunnel having a front end adaptable to differences in the curvature of aircraft fuselages, the top front end of the tunnel being adapted to be brought towards the fuselage by a telescopic rod and for this purpose extended further, in the longitudinal direction of the tunnel, than the bottom front end of the tunnel, characterised in that the end of the telescopic rod remote from the front end of the tunnel is positively guided for movement relatively to the bottom front end of the tube that alteration of the inclination of the telescopic rod enables the top front end of the tunnel to be fitted against aircraft fuselages having different contours.

2. A passenger gangway tunnel acording to claim 1, characterised in that the telescope end remote from the front end of the tunnel is in the form of a sleeve which is longitudinally adjustable on a stationary vertical rod.

3. A passenger gang way tunnel according to claim 2, characterised in that the bottom end of the vertical rod is mounted in a joint which at least allows the rod so to swing as to vary the distance between the fuselage and the top end of the rod.

4. A passenger gangway tunnel according to claim 1, characterised in that the distance between the fuselage and the end of the telescope remote from the front end of the tunnel can be varied by horizontally adjusting this place where the telescope is pivoted.

5. A passenger gangway tunnel according to claim 1, characterised in that the place where the end of the telescope remote from the front end of the tube is pivoted can be adjusted along a path having a horizontal and a vertical component.

6. A passenger gangway tunnel according to claim 1, characterised in that the place where the end of the telescope remote from the front end of the tunnel is pivoted is situated on a part of a two-part telescope.

7. A passenger gangway tunnel according to claim 6, characterised in that the force for adjusting the second telescope is less than the force for adjusting the first telescope, and the distance which the first telescope travels when adjusted can be limited to different values.

Fig.1

Fig.2